Europäisches Patentamt

European Patent Office

Office européen des brevets

(19)

(11) Publication number: **0 039 837**

**B1**

(12) **EUROPEAN PATENT SPECIFICATION**

(45) Date of publication of patent specification: **19.12.84**

(51) Int. Cl.³: **C 22 B 3/00, C 22 B 19/26**

(21) Application number: **81103236.6**

(22) Date of filing: **29.04.81**

(54) Process for the oxidation of ferrous ions to the ferric state in sulfate leach solutions.

(30) Priority: **08.05.80 CA 351508**

(43) Date of publication of application:
**18.11.81 Bulletin 81/46**

(45) Publication of the grant of the patent:
**19.12.84 Bulletin 84/51**

(84) Designated Contracting States:
**BE DE FR IT NL**

(56) References cited:
**CA-A- 550 346**
**DE-A-1 816 608**
**DE-A-2 821 309**
**US-A-3 985 857**
**US-A-4 067 789**
**US-A-4 085 016**

**CHEMICAL ENGINEERING, 5 March 1973 New York J.C. DAVIS "Higher Electrolytic Zinc Yield" pages 62, 63**

(73) Proprietor: **NORANDA INC.**
**P.O. Box 45 Suite 4500 Commerce Court West Toronto Ontario, M5L 1B6 (CA)**

(72) Inventor: **Houlachi, George J.**
**2160 rue De Salaberry, Apt. 12**
**Montreal, Quebec H3M 1K7 (CA)**
Inventor: **Baltazar, Varujan**
**4121 Notre Dame Blvd. Apt. 304, Chomedey Quebec (CA)**
Inventor: **Claessens, Pierre L.**
**318 Houle Street St. Eustache Quebec (CA)**

(74) Representative: **Patentanwälte Müller-Boré, Deufel, Schön, Hertel, Lewald, Otto Postfach 26 02 47 Isartorplatz 6 D-8000 München 26 (DE)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

## 0 039 837

**Description**

This invention relates to the selective removal of iron in the ferric state from sulfate leach solutions, and more particularly to the selective oxidation of ferrous ions present in the solutions to the ferric state prior to iron precipitation.

In the conventional electrolytic process for recovering zinc from raw materials containing iron, more particularly from zinc ferrites commonly formed in the roasting of zinc concentrates, zinc calcine is first subjected to the so-called "neutral leach" when it is leached with dilute sulfuric acid until a neutral solution is formed. This solution is then purified to remove impurities such as copper, cobalt and cadmium and sent to electrolysis while the residue is further leached with sulfuric acid to dissolve zinc ferrites and remove iron in the ferric state by precipitation as ferric hydroxide or jarosite crystals. During both leaching operations, ferrous ions are formed following a series of reactions between residual metal sulfides and ferric ions in the acidic media. To eliminate the ferrous ions, it is necessary to oxidize these ions to their ferric state and subsequently precipitate iron, for example as a jarosite or goethite.

A known method of oxidizing the ferrous ions is to use manganese compounds, such as potassium permanganate or manganese dioxide, as oxidants. Potassium permanganate is generally used in the neutral leach stage where the pH of the solution is kept around a value of 4. Manganese dioxide or manganese ore cannot be effectively used at this stage due to the precipitation of ferric hydroxide which deactivates the ore. However, during the following acid leach stage, where precipitation of ferric hydroxide cannot occur due to high acidity, manganese dioxide or manganese ore is preferentially used because of its lower cost as compared to potassium permanganate or other manganese compounds. The use of manganese dioxide to oxidize ferrous ions to the ferric state is well known in the art and is disclosed, for example, in the article entitled "Higher Electrolyte Zinc Yield" published in Chemical Engineering, March 5, 1973, pages 62 and 63.

A major drawback associated with the utilization of these manganese oxidants is the introduction of excessive amounts of manganese ions to the system. This not only renders the purification of zinc sulfate solution more difficult due to increased specific gravity of the solution, but also causes the formation of an insoluble manganese dioxide layer on the anodes during the electrowinning step, which requires frequent and costly cleaning of the electrowinning cells. Another drawback is a low utilization efficiency of about 70%. These and other problems caused by excessive manganese ions in leach solutions containing metals to be treated by electrolysis are disclosed, for example, in U.S. Patent No. 4,067,789 issued January 10, 1978 to Leonard Harris et al. This patent proposes a method for removing manganese ions from zinc sulfate bearing solutions by adding an oxidant capable of oxidising soluble manganese ion to insoluble and filterable gamma-manganese dioxide in an amount of from about 130% to 150% of the theoretical amount required for substantially total manganese removal from the solution. This operation obviously renders the process more complex and increases its cost.

German patent application 28 21 309 (Interox Chemicals Ltd.) discloses the use of peroxomonosulfuric acid ($H_2SO_5$, commonly known as Caro's acid) to leach zinc ore, during which treatment precipitation of iron is also effected.

Canadian patent 550,346 (Hudson Bay Mining and Smelting Co.) also discloses the use of Caro's acid to oxidise iron and cobalt ions. However, in both disclosures the Caro's acid is produced chemically and retains the handling disadvantages of such reagents.

According to the present invention we provide a process for selectively removing iron in a ferric state from a sulfate leach solution by the improvement comprising:

a) producing a fresh peroxosulfuric compound on-site by electrochemical oxidation of a portion of the sulfuric acid which is normally used as a leachant in the sulfate leach solution or a mixture of said portion of sulfuric acid with its salts and

b) selectively oxidising ferrous ions present in said solution to the ferric state by adding an essentially stoichiometric amount or a small excess not exceeding 120% of the stoichiometric amount of said freshly produced peroxosulfuric compound to the solution.

The present invention thus overcomes the problems caused by the presence of excessive manganese ions in leach solutions by avoiding the use of manganese oxidants and substituting peroxosulfuric compounds such as peroxodisulfuric acid ($H_2S_2O_8$ commonly called persulfuric acid) and peroxomonosulfuric acid (permonosulfuric acid or Caro's acid), as well as mixtures or combinations thereof. These acids decompose, upon reduction, to sulfuric acid and hydrogen peroxide and finally into water and thus do not introduce any foreign ions into the sulfuric leach solution. Salts of such acids, such as sodium persulfate, potassium persulfate or ammonium persulfate or mixtures thereof are also suitable, particularly when it is desired to introduce sodium, potassium or ammonium ions into the leach solution.

The on-site electrochemically generated peroxosulfuric compound can either be produced directly from a sulfuric acid solution or from a mixture of sulfuric acid and alkali metal or ammonium sulfate, depending on the desired cations. The addition of the peroxosulfuric compound to the reaction vessel can be carried out continuously or intermittently, as required.

2

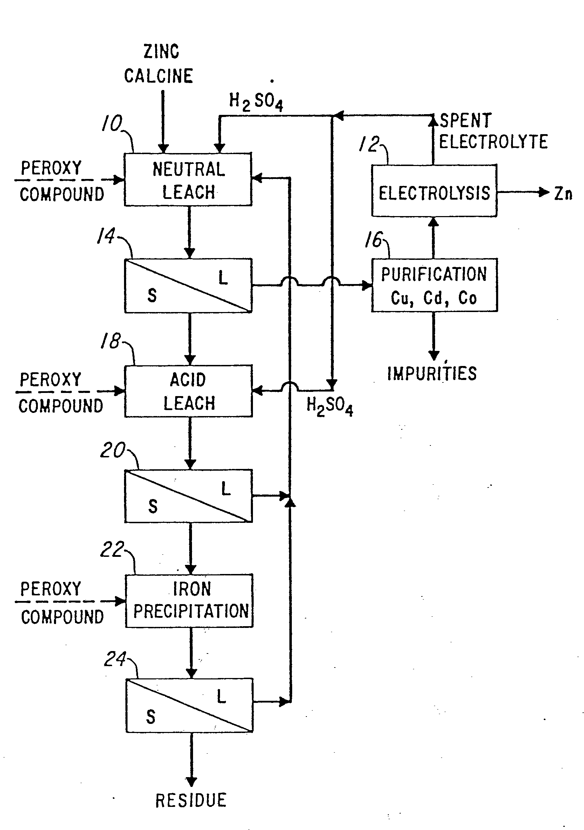

The invention will now be disclosed, by way of example, with reference to the accompanying drawing which illustrates a flowsheet of a process for recovering zinc from calcine zinc concentrates.

As shown in the drawing, zinc calcine is fed to a neutral leach stage 10 where it is dissolved by sulfuric acid preferably originating from the spent electrolyte produced in the electrolysis stage 12. Leaching is normally carried out at a temperature between about 50°C and the boiling temperature of the solution at a pH of about 4. Neutral leaching is followed by separation of the liquid containing the zinc from the solids as indicated by block 14. The liquid solution from stage 14 is fed to a purification stage 16 for removal of impurities such as copper, cadmium and cobalt, and then sent to the electrolysis stage 12. The solids from the separation stage 14 are fed to an acid leach stage 18 where they are treated with hot sulfuric acid preferably originating from spent electrolyte. Acid leaching is carried out at a temperature between about 50°C and the boiling temperature of the solution and at a pH between about 1 and 4. The liquid solution is separated from the solids in stage 20 and recycled to the neutral leach stage 10. The solids are fed to an iron removal stage 22 where iron is precipitated in the ferric state. Iron may be precipitated by the so-called "Jarosite Process", "Goethite Process", "Conversion Process" or any other similar process. The iron precipitate is fed to a separation stage 24 from which the liquid solution is normally recycled to the neutral leach stage 10 and the solid residue discarded.

In the neutral and acid leach stages 10 and 18, ferrous ions are formed following a series of reactions between metal sulfides and ferric ions in the acidic media as commonly known. Since iron removal is done in a ferric state, it is necessary to oxidize such ferrous ions to the ferric state for achieving higher zinc recovery. An oxidizing agent is thus normally fed to the iron precipitation stage 22 to oxidize ferrous ions to ferric ions. Such an oxidizing agent has hereinbefore been primarily manganese dioxide or manganese ore and this has often resulted in the build-up of an excessive amount of manganese ions in the leach solution and the resulting problems mentioned above.

It is proposed in accordance with the present invention to use as a replacement for manganese dioxide or manganese ore a peroxosulfuric compound such as a peroxosulfuric acid or its salt, in a stoichiometric amount or slight excess not exceeding 120%. As mentioned previously, the best characterized peroxosulfuric compounds are the peroxydisulfuric acid $(H_2S_2O_8)$ and the peroxomonosulfuric acid $(H_2SO_5)$ or mixtures thereof, which decompose upon reduction into sulfuric acid and hydrogen peroxide and finally into water and oxygen. The major advantage of using such compounds is that no foreign ions, such as manganese ions, are added to the solution. If salts of such acids are used, ions which are introduced into the system, such as sodium, potassium or ammonium ions, are normally required in the course of the process, for example for precipitation of iron as a corresponding jarosite. Another advantage is that the cost of peroxysulfuric compounds is relatively low and their utilisation efficiency, as compared with other potential oxidants is high, in fact it is normally 100%.

It is further proposed in accordance with the present invention to produce the above peroxosulfuric compounds electrolytically on-site from a sulfuric acid solution or from a mixture of sulfuric acid and alkali metal or ammonium sulfate depending on the desired cations. The advantage of producing the peroxosulfuric compounds on-site is that no market uncertainties are encountered nor extraneous costs of transportation and handling are involved. A method and an apparatus for on-site generation of peroxosulfuric acid, such as $H_2S_2O_8$ or $H_2SO_5$, for the oxidation of organic materials in concentrated sulfuric acid are disclosed in U.S. Patent No. 4,085,016 issued April 18, 1978 and also assigned to Noranda Mines Limited, the assignee the present application. As indicated in the above patent, the peroxosulfuric acids are somewhat unstable and cannot be stored for a prolonged period of time. However, they can be readily employed soon after their formation and in fact experience has shown that $H_2S_2O_8$ and $H_2SO_5$ can be stored in closed containers for periods of about two weeks without decomposing more than 50%. The addition of the peroxosulfuric compounds can be carried out continuously or at various intervals of time, as required. The peroxosulfuric compounds are preferably fed into the iron precipitation stage 22, although they could also be used in the neutral and acid leach stages 10 and 18, if required.

The amount of peroxosulfuric compounds fed into the system should be substantially 100% of the stoichiometric amount of peroxo-compounds required to oxidize the ferrous ions to the ferric state or a small excess of 110% or so. This amount should not exceed 120% otherwise other ions in solution having a higher electromotive potential will be oxidized such as, for example, manganese ions, chloride ions and cobalt ions which have electromotive potentials of 1.25 v, 1.36 v and 1.8 v, respectively (compared to the iron electromotive potential of 0.77 v).

The invention will be further disclosed in connection with the following examples which are set forth for the purpose of illustration only:

Example 1
Tests were carried out with filtered 100 ml samples of neutral leach solution of zinc calcine. The ferrous ion concentration of each sample was adjusted to 550 mgpl by addition of ferrous sulfate. The oxidation of the ferrous ions was effected by addition of stoichiometric quantities of on-site electrochemically generated peroxosulfuric composition comprising a mixture of persulfuric acid and Caro's acid at pH values of 3, 4 and 5 and temperatures of 25, 50 and 80°C. After a reaction time of 5 minutes, the samples were analyzed for their ferrous ion content. The results shown in the following Table I indicated that the utilization efficiency of persulfuric acid was 98%—100% in all cases.

TABLE I

| Solution pH | Solution temperature (°) | Oxidation efficiency (%) |
|---|---|---|
| 3 | 25 | 100.0 |
|  | 50 | 100.0 |
|  | 80 | 98.7 |
| 4 | 25 | 98.0 |
|  | 50 | 100.0 |
|  | 80 | 100.0 |
| 5 | 25 | 99.1 |
|  | 50 | 98.3 |
|  | 80 | 99.0 |

Example 2

A series of tests were carried out to simulate the "low acid" leach process commonly used in zinc hydrometallurgy practice by continuously feeding neutral leach underflow, spent electrolyte and pond water to a 800 ml capacity reaction vessel, at rates of 16, 16 and 8 ml/min respectively, providing a 20 min residence time in the reactor. The acidity of the solution varied between 20—40 gpl $H_2SO_4$. The temperature of the solution was kept at 75°C and agitation was provided. Persulfuric acid was added continuously to the reaction vessel in quantities corresponding stoichiometrically to amount of $Fe^{2+}$ ions. The results shown in the following Table II indicated that, under continuous operating conditions, complete oxidation of the ferrous ions from initial values varying from 78 to 380 mgpl, could be achieved at about 98%—99% utilization efficiency of the persulfuric acid.

TABLE II

| Initial $[Fe^{2+}]$ mgpl | $H_2S_2O_8$ added g/hr | End $[Fe^{2+}]$ mgpl | Oxidation efficiency (%) |
|---|---|---|---|
| 78 | 0.330 | 0 | 98.2 |
| 380 | 1.60 | 0 | 98.8 |

Example 3

Solution samples were taken from the iron precipitation circuit at Canadian Electrolytic Zinc Limited in Valleyfield, Quebec, and analyzed for their ferrous ion concentration. Equivalent amounts of persulfuric acid were added to these samples to oxidize all the ferrous ions present in the solution. The results shown in the following Table III indicated that, for complete oxidation of ferrous ions present in the jarosite solutions, about 110% of the stoichiometric amount of persulfuric acid will be sufficient.

TABLE III

| Initial $Fe^{++}$ gpl (before adding $H_2S_2O_8$) | Amount of $H_2S_2O_8$ added (110% theoretical requirement) | Reaction time (after addition of $H_2S_2O_8$) (hours) | Final $[Fe^{++}]$ (gpl) | Final $[Fe_{total}]$ (gpl) | Final $[H_2SO_4]$ (gpl) |
|---|---|---|---|---|---|
| 1.6 | — | Control Test 15 hours leach | 1.6 | 7.1 | 20.2 |
| 1.6 | 3.04 g/L | 4.5 | 0 | 7.8 | 29.3 |
| 1.6 | 3.04 g/L | 3.0 | 0 | 7.5 | 29.3 |
| 1.6 | 3.04 g/L | 1.5 | 0 | 7.8 | 30.7 |

Although the use of peroxosulfuric compounds for the oxidation of ferrous ions to the ferric state has been disclosed in connection with sulfate leaching of zinc calcine concentrates, it is to be understood that it could be used in any sulfate leach solution containing iron to be precipitated in a ferric state. Also various temperatures, pressures and acid concentrations can be used as required without affecting the basic concept of this invention.

### Claims

1. In a process for selectively removing iron in a ferric state from a sulfate leach solution, the improvement which comprises:

a) producing a fresh peroxosulfuric compound on-site by electrochemical oxidation of a portion of the sulfuric acid which is normally used as a leachant in the sulfate leach solution or a mixture of said portion of sulfuric acid with its salts and

b) selectively oxidising ferrous ions present in said solution to the ferric state by adding an essentially stoichiometric amount or a small excess not exceeding 120% of the stoichiometric amount of said freshly produced peroxosulfuric compound to the solution.

2. A process as defined in claim 1, wherein said sulfate leach solution is a zinc sulfate leach solution.

3. A process as defined in claim 1 or 2, wherein said peroxosulfuric compound is a mixture of peroxodisulfuric acid and peroxomonosulfuric acid.

4. A process as defined in any one of the preceding claims, wherein said peroxosulfuric compound is selected from sodium persulfate, potassium persulfate, ammonium persulfate or mixtures thereof.

### Patentansprüche .

1. Verbesserung eines Verfahrens zur selektiven Entfernung von Eisen in dreiwertigem Zustand aus einer Sulfatauslauglösung, dadurch gekennzeichnet, daß man

a) eine frische Peroxoschwefelsäureverbindung in situ durch elektrochemische Oxidation eines Teils der Schwefelsäure, die normalerweise als Auslaugmittel in der Sulfatauslauglösung verwendet wird, oder einer Mischung dieses Teils von Schwefelsäure mit Salzen davon erzeugt und

b) selektiv in dieser Lösung vorhandene Eisen(II)-Ionen zum Eisen(III)-Zustand oxidiert, indem man eine im wesentlichen stöchiometrische Menge oder einen kleinen Überschuß, der 120% der stöchiometrischen Menge dieser frisch gebildeten Peroxoschwefelsäureverbindung nicht übersteigt, zur Lösung zugibt.

2. Verfahren nach Anspruch 1, dadurch gekennzeichnet, daß die Sulfatauslauglösung eine Zinksulfatauslauglösung ist.

3. Verfahren nach Anspruch 1 oder 2, dadurch gekennzeichnet, daß die Peroxoschwefelsäureverbindung ein Gemisch von Peroxodischwefelsäure und Peroxomonoschwefelsäure ist.

4. Verfahren nach einem der vorhergehenden Ansprüche, dadurch gekennzeichnet, daß als Peroxoschwefelsäureverbindung Natriumpersulfat, Kaliumpersulfat, Ammoniumpersulfat oder Gemische davon verwendet werden.

### Revendications

1. Dans un procédé d'élimination sélective du fer à l'état ferrique, à partir d'une solution sulfatique de lixiviation, les améliorations qui consistent à:

a) produire in situ un composé sulfurique peroxydé frais par oxydation électrochimique d'une portion de l'acide sulfurique qui est employé normalement comme agent de lixiviation dans la solution sulfatique de lixiviation ou d'un mélange de cette portion d'acide sulfurique, avec des sels de celui-ci, et

b) oxyder sélectivement des ions ferreux présents dans cette solution, jusqu'à l'état ferrique, par addition à la solution d'une quantité pratiquement stoechiométrique ou d'un faible excès, ne dépassant pas 120% de la quantité stoechiométrique, dudit composé sulfurique peroxydé fraichement produit.

2. Un procédé selon la revendication 1, caractérisé en ce que la solution sulfatique de lixiviation est une solution de lixiviation de sulfate de zinc.

3. Un procédé selon la revendication 1 ou 2, caractérisé en ce que le composé sulfurique peroxydé est un mélange d'acide peroxodisulfurique et d'acide peroxomonosulfurique.

4. Un procédé selon l'une quelconque des revendications précédentes, caractérisé en ce que le composé sulfurique peroxydé est choisi parmi le persulfate de sodium, le persulfate de potassium, le persulfate d'ammonium ou des mélanges de ceux-ci.